# EUROPEAN PATENT APPLICATION

(11) **EP 4 408 054 A1**
(43) Date of publication of application: **31.07.2024**
(21) Application number: 22905996.9
(22) Date of filing: 26.09.2022
(51) Int. Cl.: H04W 16/10, H04W 16/14

(54) **METHOD AND APPARATUS FOR INTER-CELL INTERFERENCE COORDINATION, SERVER, AND STORAGE MEDIUM**

(30) Priority: 17.12.2021 CN 202111551195
(71) Applicant: ZTE Corporation, Shenzhen, Guangdong 518057 (CN)
(72) Inventor: ZHAN, Yong, Shenzhen, Guangdong 518057 (CN)
(74) Representative: Osterhoff, Utz
(86) International application number: PCT/CN2022/121432
(87) International publication number: WO 2023/109244

(57) **Abstract**

Embodiments of the present application relate to the technical field of communication, and in particular to an interference coordination method of a cell, an interference coordination device of a cell, a server and a storage medium. The interference coordination method of the cell includes: obtaining a strategy information table of a target cell in a next cycle, and the strategy information table includes a first cycle optimizing strategy of the target cell and a second cycle optimizing strategy of each coherent cell of the target cell; obtaining a cluster state of the target cell according to the first cycle optimizing strategy and each second cycle optimizing strategy; and determining an interference coordination strategy of the target cell in the next cycle according to the first cycle optimizing strategy and the cluster state.

## Description

### CROSS-REFERENCE TO RELATED APPLICATIONS

This application claims priority to Chinese Patent Application No. 202111551195.5, filed on December 17, 2021.

### TECHNICAL FIELD

The embodiments of the present application relate to the technical field of communication, and in particular to an interference coordination method of a cell, an interference coordination device of a cell, a server and a storage medium.

### BACKGROUND

How to efficiently use spectrum resources has become a current research hotspot in the field of mobile wireless networks, and a series of emerging technologies are also continuing to emerge. Among them, frame structure arrangement and Dynamic Spectrum Sharing (DSS for short) arrangement are representatives. Frame structure arrangement refers to a technology that dynamically adjusts the proportion of uplink frames and downlink frames based on the proportion of uplink load and downlink load in a Time Division Duplex (TDD for short) network. By the frame structure arrangement, on the one hand, it can dynamically adapt to the changing trends of uplink load and downlink load, and improve spectrum resource usage efficiency; on the other hand, it can also improve user experience. DSS arrangement refers to the DSS state (such as 3G/4G/5G DSS) in which the cell supports the simultaneous deployment of wireless access network services of multiple standards on a single spectrum, and the state (such as pure 5G) in which only a single standard service is provided. The real-time status of the cell is dynamically adjusted according to the real-time load proportion changes of users of each mode. Using DSS arrangement, on the one hand, it can dynamically adapt to the changing trends of different standard services; on the other hand, it can also significantly improve the usage efficiency of spectrum resource by eliminating the fixed expenses of DSS rate matching.

However, for frame structure arrangement, since there may be significant differences in the proportion of the uplink load and downlink load between different cells, after enabling frame structure arrangement, there is a high probability that the frame structures between coherent cells cannot be aligned. If the downlink subframes of co-frequency adjacent cells collide with the uplink subframes of the local cell, it will cause serious interference to the uplink of the local cell. For DSS arrangement, since there may be significant differences in the proportion of services of different standards between different cells, after enabling DSS arrangement, there is a high probability that the cell status between coherent cells cannot be aligned. If the co-frequency adjacent cell is in the 4G/5G DSS state and the local cell is in the pure 5G state, the Cell Reference Signal (CRS for short) of the co-frequency adjacent DSS 4G will cause serious interference to the Physical Downlink Shared Channel (PDSCH for short) of the local cell.

### SUMMARY

The main purpose of the embodiments of the present application is to provide an interference coordination method of a cell, an interference coordination device of a cell, a server and a storage medium, which aims to realize automatic and accurate inter-cell interference coordination under frame structure arrangement scheme or DSS arrangement scheme, so as to eliminate/weaken the impact of interference between coherent cells on user channel quality.

To achieve the above objectives, embodiments of the present application provide an interference coordination device of a cell, including: obtaining a strategy information table of a target cell in a next cycle, and the strategy information table includes a first cycle optimizing strategy of the target cell and a second cycle optimizing strategy of each coherent cell of the target cell; obtaining a cluster state of the target cell according to the first cycle optimizing strategy and each second cycle optimizing strategy; and determining an interference coordination strategy of the target cell in the next cycle according to the first cycle optimizing strategy and the cluster state.

To achieve the above objectives, embodiments of the present application further provide an interference coordination device of a cell, including: a first obtaining module, a second obtaining module and a strategy determination module; the first obtaining module is configured to obtain a strategy information table of a target cell in a next cycle, and the strategy information table includes a first cycle optimizing strategy of the target cell and a second cycle optimizing strategy of each coherent cell of the target cell; the second obtaining module is configured to obtain a cluster state of the target cell according to the first cycle optimizing strategy and each second cycle optimizing strategy; and the strategy determination module is configured to determine an interference coordination strategy of the target cell in the next cycle according to the first cycle optimizing strategy and the cluster state based on a preset interference coordination rule.

To achieve the above objectives, embodiments of the present application further provide a server, including: at least one processor and a memory communicatively connected to the at least one processor, the memory is configured to store an instruction executable by the at least one processor, and the instruction is executed by the at least one processor so that the at least one processor executes the above-mentioned interference coordination method of the cell.

To achieve the above objectives, embodiments of the present application further provide a computer-readable storage medium storing a computer program, and when the computer program is executed by a processor, the above-mentioned interference coordination method of the cell is implemented.

The present application provides an interference coordination method of a cell, including: during the interference coordination process of the target cell, obtaining a strategy information table of a target cell in a next cycle, and the strategy information table includes a first cycle optimizing strategy of the target cell and a second cycle optimizing strategy of each coherent cell of the target cell; obtaining a cluster state of the target cell according to the first cycle optimizing strategy and each second cycle optimizing strategy; and determining an interference coordination strategy of the target cell in the next cycle according to the first cycle optimizing strategy and the cluster state. The cluster state of the target cell is obtained by combining the next cycle optimizing strategy of the target cell and the next cycle optimizing strategy of each coherent cell, and then the appropriate interference coordination strategy is determined according to the cluster state of the target cell and the cycle optimizing strategy, thus enabling to realize automatic and accurate inter-cell interference coordination under frame structure arrangement scheme or DSS arrangement scheme to eliminate/weaken the impact of interference between coherent cells on user channel quality, and solving the technical problem of serious interference between coherent cells caused by the inability to align the frame structure between coherent cells due to frame structure arrangement and the inability to align the cell state between coherent cells due to DSS arrangement.

### BRIEF DESCRIPTION OF THE DRAWINGS

FIG. 1 is a flow chart of an interference coordination method of a cell using a DSS arrangement scheme provided by an embodiment of the present application.
FIG. 2 is a schematic view of a deployment of a target cell and each coherent cell provided by an embodiment of the present application.
FIG. 3 is a schematic view of a cluster state of a target cell provided by an embodiment of the present application.
FIG. 4 is a schematic view of strategy information of a target cell using a DSS arrangement scheme provided by an embodiment of the present application.
FIG. 5 is a flow chart of an interference coordination method of a cell using a frame structure arrangement scheme provided by an embodiment of the present application.
FIG. 6 is a schematic view of strategy information of a target cell using a frame structure arrangement scheme provided by an embodiment of the present application.
FIG. 7 is a flow chart of an interference coordination method of a cell provided by an embodiment of the present application.
FIG. 8 is a schematic view of initialization strategy information of a target cell provided by an embodiment of the present application.
FIG. 9 is a structural schematic view of an interference coordination device of a cell provided by an embodiment of the present application.
FIG. 10 is a structural schematic view of a server provided by an embodiment of the present application.

### DETAILED DESCRIPTION OF THE EMBODIMENTS

In order to make the purpose, technical solutions and advantages of embodiments of the present application more clear, each embodiment of the present application will be described in detail below in conjunction with the accompanying drawings. However, those of ordinary skill in the art can understand that in each embodiment of the present application, many technical details are provided to enable readers to better understand the present application. However, even without these technical details and various changes and modifications based on the following embodiments, the technical solution claimed in the present application can also be implemented. The division of the following embodiments is for the convenience of description and should not constitute any limitation on the specific implementation of the present application. The various embodiments can be combined with each other and referenced with each other on the premise that there is no contradiction.

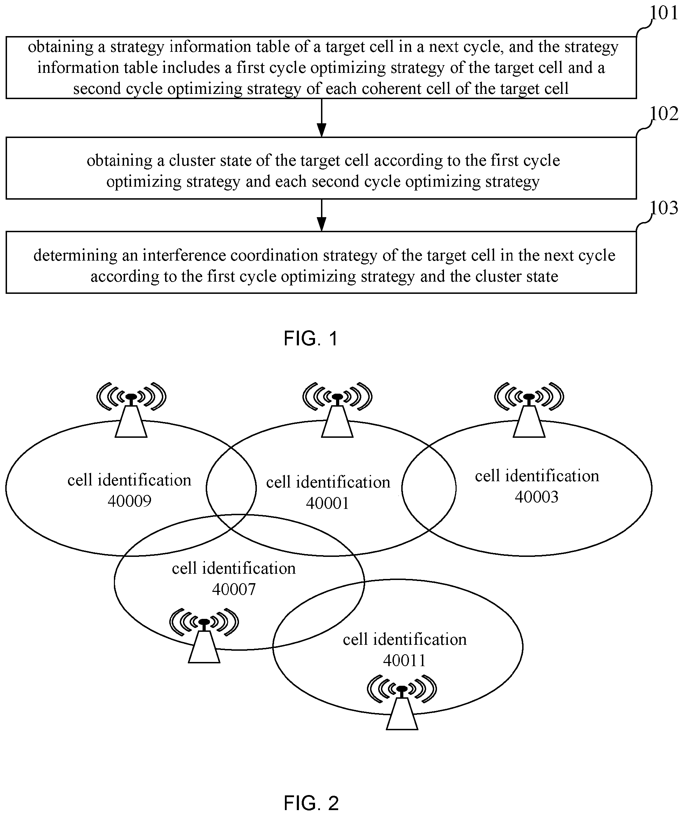

An embodiment of the present application relates to an interference coordination method of a cell, which is applied in a target cell using a DSS arrangement scheme, as shown in FIG. 1, including:
Step 101, obtaining a strategy information table of a target cell in a next cycle, and the strategy information table includes a first cycle optimizing strategy of the target cell and a second cycle optimizing strategy of each coherent cell of the target cell.

In an example implementation, any base station cell can be configured as a target cell. Each coherent cell of the target cell refers to all co-frequency adjacent cells that have overlapping coverage with the target cell. As shown in FIG. 2, all co-frequency adjacent cells that have overlapping coverage with the base station cell 40001 are the base station cell 40003, the base station cell 40007 and the base station cell 40009. Therefore, when the base station cell 40001 is configured as the target cell, its each coherent cell is the base station cell 40003, the base station cell 40007 and the base station cell 40009. Similarly, when the base station cell 40003 is configured as the target cell, its each coherent cell is the base station cell40001; when the base station cell 40007 is configured as the target cell, its each coherent cell is the base station cell 40001, the base station cell 40009 and the base station cell 40011; when the base station cell 40009 is configured as the target cell, its each coherent cell is the base station cell 40001 and the base station cell 40007; when the base station cell 40011 is configured as the target cell, its each coherent cell is the base station cell 40007.

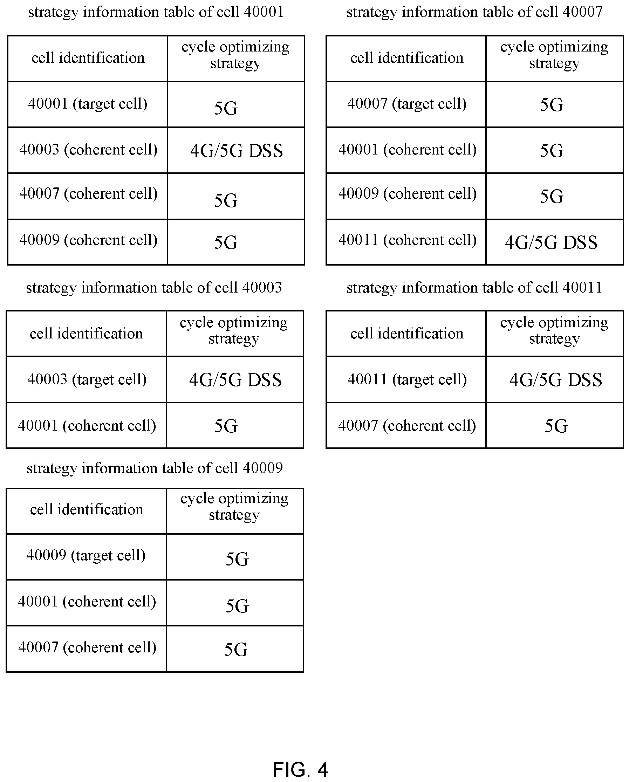

In an example implementation, the strategy information table of each target cell is composed of the cell identification and the cycle optional strategy of the next cycle of the cell. As shown in FIG. 4, the strategy information table of each target cell is given. In the strategy information table, in order to distinguish the target cell and each coherent cells, the target cell can be set in the first place, or it can be distinguished by adding an identification, or it can be distinguished directly according to the cell identification of each cell. The cell identification refers to a unique and arbitrary identification number assigned to each cell, and its initialization value is the identification number assigned by the system. The cycle is set in advance, so the next cycle refers to the most recent cycle in the future. The optimizing strategy for the next cycle refers to the strategy that each cell selects for the next cycle based on its load forecasting for the next cycle and other related information, and its initialization value is the predefined default strategy that is the same for all cells.

In an example implementation, the first cycle optimizing strategy and the second cycle optimizing strategy are pure 5G state (that is, 5G) or 4G/5G shared state (that is, 4G/5G DSS).

Step 102: obtaining a cluster state of the target cell according to the first cycle optimizing strategy and each second cycle optimizing strategy.

In an example implementation, the cluster state of the target cell is determined according to the first cycle optimizing strategy of the target cell and the second cycle optimizing strategy of each coherent cell. When the first cycle optimizing strategy and each second cycle optimizing strategy are all consistent, the cluster state of the target cell is considered to be an intra-cluster state. When there is inconsistency between the first cycle optimizing strategy and each second cycle optimizing strategy, the cluster state of the target cell is considered to be a non-intra-cluster state.

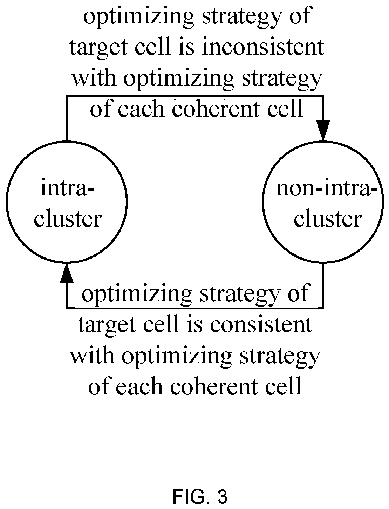

In an example implementation, as shown in FIG. 3, when the cycle optimizing strategy of the target cell and the cycle optimizing strategy of each coherent cell in the next cycle are consistent, it means that the target cell and each coherent cell are in the same working environment and state in the next cycle, at this time, the cluster state of the target cell is considered to be the intra-cluster state. When the cycle optimizing strategy of the target cell and the cycle optimizing strategy of each coherent cell in the next cycle are inconsistent, it means that the target cell and each coherent cell are in different working environments and states in the next cycle, at this time, the cluster state of the target cell is considered to be a non-intra-cluster state.

In an example implementation, taking the strategy information table of the target cell given in FIG. 4 as an example. For the target cell 40001, because the cycle optimizing strategy of the coherent cell 40003 is inconsistent with the cycle optimizing strategy of the target cell 40001, the target cell 40001 is a non-intra-cluster state. For the target cell 40003, because the cycle optimizing strategy of the coherent cell 40001 is inconsistent with the cycle optimizing strategy of the target cell 40003, the target cell 40003 is a non-intra-cluster state. For the target cell 40007, because the cycle optimizing strategy of the coherent cell 40011 is inconsistent with the cycle optimizing strategy of the target cell 40007, the target cell 40007 is a non-intra-cluster state. For the target cell 40009, because the cycle optimizing strategies of each coherent cell 40001 and 40007 are consistent with the cycle optimizing strategy of the target cell 40009, therefore, the target cell 40009 is an intra-cluster state. For the target cell 40011, because the cycle optimizing strategy of the coherent cell 40007 is inconsistent with the cycle optimizing strategy of the target cell 40011, the target cell 40011 is a non-intra-cluster state.

Step 103: determining an interference coordination strategy of the target cell in the next cycle according to the first cycle optimizing strategy and the cluster state.

In an example implementation, the first cycle optimizing strategy of the target cell is a pure 5G state or a 4G/5G shared state, and the cluster state of the target cell is an intra-cluster state or a non-intra-cluster state. The interference coordination strategy is determined by the following rules: (1) when the cluster state is the intra-cluster state and the first cycle optimizing strategy is the pure 5G state, the interference coordination strategy is not to perform interference coordination; (2) when the cluster state is the intra-cluster state and the first cycle optimizing strategy is the 4G/5G shared state, the interference coordination strategy is an adaptive switch symbol level rate matching strategy; (3) when the cluster state is the non-intra-cluster state and the first cycle optimizing strategy is the pure 5G state, the interference coordination strategy is an adaptive switch symbol level rate matching strategy; (4) when the cluster state is the non-intra-cluster state and the first cycle optimizing strategy is the 4G/5G shared state, the interference coordination strategy is an adaptive switch symbol level rate matching strategy.

In an example implementation, the adaptive switch symbol level rate matching strategy includes: determining whether to perform symbol-level rate matching according to interference strength of a 4G Cell Reference Signal of each coherent cell; and selecting a target resource block from each of resource blocks and dispatching according to an interference situation of each resource block measured by the target cell on a Channel State Information-Interference Measurement Resource (CSI-IM for short).

In an example implementation, taking the strategy information table of the target cell given in FIG. 4 as an example. The target cell 40001 is a non-intra-cluster state and the first cycle optimizing strategy is a pure 5G state, the interference coordination strategy of the target cell 40001 is the adaptive switch symbol level rate matching strategy. The target cell 40003 is a non-intra-cluster state and the first cycle optimizing strategy is a 4G/5G shared state, the interference coordination strategy of the target cell 40003 is the adaptive switch symbol level rate matching strategy. The target cell 40007 is a non-intra-cluster state and the first cycle optimizing strategy is a pure 5G state, the interference coordination strategy of the target cell 40007 is the adaptive switch symbol level rate matching strategy. The target cell 40009 is a non-intra-cluster state and the first cycle optimizing strategy is a pure 5G state, the interference coordination strategy of the target cell 40009 is not to perform interference coordination. The target cell 40011 is a non-intra-cluster state and the first cycle optimizing strategy is a 4G/5G shared state, the interference coordination strategy of target cell 40011 is the adaptive switch symbol level rate matching strategy.

In an example implementation, the optimizing strategy enabled by the target cell in the next cycle is each cycle optimizing strategy shown in FIG. 4.

In this embodiment, during the interference coordination process of the target cell, obtaining a strategy information table of a target cell in a next cycle, and the strategy information table includes a first cycle optimizing strategy of the target cell and a second cycle optimizing strategy of each coherent cell of the target cell; obtaining a cluster state of the target cell according to the first cycle optimizing strategy and each second cycle optimizing strategy; and determining an interference coordination strategy of the target cell in the next cycle according to the first cycle optimizing strategy and the cluster state. The cluster state of the target cell is obtained by combining the next cycle optimizing strategy of the target cell and the next cycle optimizing strategy of each coherent cell, and then the appropriate interference coordination strategy is determined according to the cluster state of the target cell and the cycle optimizing strategy, thus enabling to realize automatic and accurate inter-cell interference coordination under frame structure arrangement scheme or DSS arrangement scheme to eliminate/weaken the impact of interference between coherent cells on user channel quality, and solving the technical problem of serious interference between coherent cells caused by the inability to align the frame structure between coherent cells due to frame structure arrangement and the inability to align the cell state between coherent cells due to DSS arrangement.

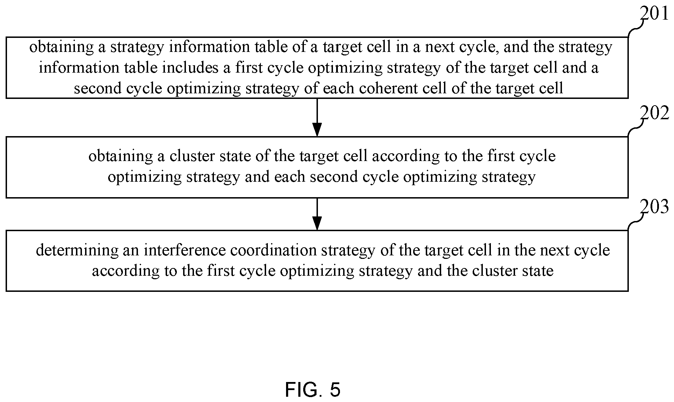

An embodiment of the present application relates to an interference coordination method of a cell, which is applied in a target cell using a frame structure arrangement scheme, as shown in FIG. 5, including:
Step 201, obtaining a strategy information table of a target cell in a next cycle, and the strategy information table includes a first cycle optimizing strategy of the target cell and a second cycle optimizing strategy of each coherent cell of the target cell.

In an example implementation, this step is substantially the same as step 101 in the embodiment of the present application, and will not be described again here. The only difference is that the first cycle optimizing strategy and the second cycle optimizing strategy are DDDSU frame structure or DSUUU frame structure. DDDSU frame structure means that the base station cell adopts 30KHz subcarrier spacing and 2.5ms single cycle frame structure, and the five slots in each cycle are three downlink slots, one special slot and one uplink slot. DSUUU frame structure means that the base station cell adopts 30KHz subcarrier spacing and 2.5ms single cycle frame structure, and the five slots in each cycle are one downlink slot, one special slot and three uplink slots.

Step 202: obtaining a cluster state of the target cell according to the first cycle optimizing strategy and each second cycle optimizing strategy.

In an example implementation, when the first cycle optimizing strategy and each second cycle optimizing strategy are all consistent, the cluster state of the target cell is an intra-cluster state. When there is inconsistency between the first cycle optimizing strategy and each second cycle optimizing strategy, the cluster state of the target cell is a non-intra-cluster state.

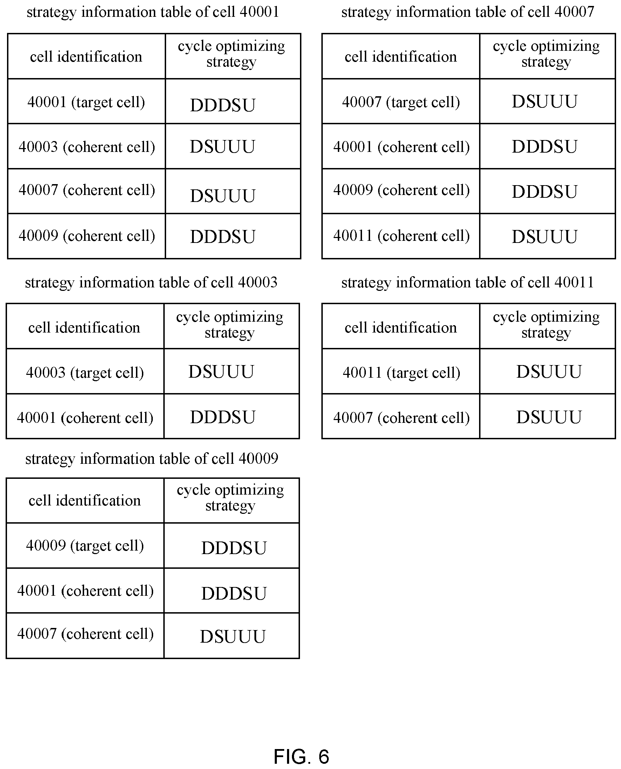

In an example implementation, taking the strategy information table of the target cell given in FIG. 6 as an example. For the target cell 40001, because the cycle optimizing strategies of the coherent cells 40003 and 40007 are inconsistent with the cycle optimizing strategy of the target cell 40001, the target cell 40001 is a non-intra-cluster state. For the target cell 40003, because the cycle optimizing strategy of the coherent cell 40001 is inconsistent with the cycle optimizing strategy of the target cell 40003, the target cell 40003 is a non-intra-cluster state. For the target cell 40007, because the cycle optimizing strategies of coherent cells 40001 and 40009 are inconsistent with the cycle optimizing strategy of target cell 40007, the target cell 40007 is a non-intra-cluster state. For the target cell 40009, because the cycle optimizing strategy of each coherent cell 40007 is inconsistent with the cycle optimizing strategy of the target cell 40007, the target cell 40009 is a non-intra-cluster state. For the target cell 40011, because the cycle optimizing strategy of the coherent cell 40007 is consistent with the cycle optimizing strategy of the target cell 40011, the target cell 40011 is the intra-cluster state.

Step 203: determining an interference coordination strategy of the target cell in the next cycle according to the first cycle optimizing strategy and the cluster state.

In an example implementation, the first cycle optimizing strategy is a DDDSU frame structure or a DSUUU frame structure, and the cluster state is an intra-cluster state or a non-intra-cluster state. The interference coordination strategy is determined by the following rules: (1) the cluster state is the intra-cluster state and the first cycle optimizing strategy is the DDDSU frame structure, the interference coordination strategy is not to perform interference coordination; (2) when the cluster state is the non-intra-cluster state and the first cycle optimizing strategy is the DDDSU frame structure, the interference coordination strategy is to perform coordination in combination with a coordination switch bitmap of each coherent cell; (3) when the cluster state is the intra-cluster state and the first cycle optimizing strategy is the DSUUU frame structure, the interference coordination strategy is not to perform interference coordination; (4) when the cluster state is the non-intra-cluster state and the first cycle optimizing strategy is the DSUUU frame structure, the interference coordination strategy is to perform coordination in combination with a coordination switch bitmap of each coherent cell.

In an example implementation, taking the strategy information table of the target cell given in FIG. 6 as an example. The target cell 40001 is a non-intra-cluster state and the first cycle optimizing strategy is a DDDSU frame structure, the interference coordination strategy of the target cell 40001 is to perform coordination in combination with a coordination switch bitmap of each coherent cell. The target cell 40003 is a non-intra-cluster state and the first cycle optimizing strategy is a DSUUU frame structure, the interference coordination strategy of the target cell 40003 is to perform coordination in combination with a coordination switch bitmap of each coherent cell. The target cell 40007 is a non-intra-cluster state and the first cycle optimizing strategy is a DSUUU frame structure, the interference coordination strategy of the target cell 40007 is to perform coordination in combination with a coordination switch bitmap of each coherent cell. The target cell 40009 is a non-intra-cluster state and the first cycle optimizing strategy is a DDDSU frame structure, the interference coordination strategy of the target cell 40009 is to perform coordination in combination with a coordination switch bitmap of each coherent cell. The target cell 40011 is the intra-cluster state and the first cycle optimizing strategy is the DSUUU frame structure, the interference coordination strategy of the target cell 40011 is not to perform interference coordination.

In an example implementation, the optimizing strategy enabled by the target cell in the next cycle is each cycle optimizing strategy shown in FIG. 6.

In this embodiment, during the interference coordination process of the target cell, obtaining a strategy information table of a target cell in a next cycle, and the strategy information table includes a first cycle optimizing strategy of the target cell and a second cycle optimizing strategy of each coherent cell of the target cell; obtaining a cluster state of the target cell according to the first cycle optimizing strategy and each second cycle optimizing strategy; and determining an interference coordination strategy of the target cell in the next cycle according to the first cycle optimizing strategy and the cluster state. Obtaining the cluster state of the target cell by combining the next cycle optimizing strategy of the target cell and the next cycle optimizing strategy of each coherent cell, and then determining the appropriate interference coordination strategy according to the cluster state of the target cell and the cycle optimizing strategy, thus enabling to realize automatic and accurate inter-cell interference coordination under frame structure arrangement scheme or DSS arrangement scheme to eliminate/weaken the impact of interference between coherent cells on user channel quality, and solving the technical problem of serious interference between coherent cells caused by the inability to align the frame structure between coherent cells due to frame structure arrangement and the inability to align the cell state between coherent cells due to DSS arrangement.

An embodiment of the present application relates to an interference coordination method of a cell, which is applied in a target cell using a frame structure arrangement scheme or a target cell using a DSS arrangement scheme, as shown in FIG. 5, including:
Step 301: performing a periodic load forecasting on the target cell, and obtaining the first cycle optimizing strategy based on a forecast result of the target cell.

In an example implementation, the load of the target cell includes but is not limited to the uplink/downlink PRB utilization of the logical cell, the number of RRC users, the number of activated users, etc. The performing the periodic load forecasting on the target cell is performed based on the historical cycle load data of the target cell. The present application does not limit the specific forecasting algorithm adopted, and any periodic load forecasting algorithm can be used.

In an example implementation, when the target cell adopts a dynamic sharing spectrum arrangement manner, the generation rules of the first cycle optimizing strategy of the target cell include: (1) the forecast result is that the target cell has a light 4G load and a basic cell corresponding to the target cell has a light 4G load, the first cycle optimizing strategy is to adopt the pure 5G state; (2) when the forecast result is that the target cell has a light 4G load and a basic cell corresponding to the target cell has a heavy 4G load, the first cycle optimizing strategy adopts the 4G/5G shared state; (3) when the forecast result is that the target cell has a heavy 4G load, the first cycle optimizing strategy adopts the 4G/5G shared state.

In an example implementation, when the target cell adopts a frame structure arrangement manner, the generation rules of the first cycle optimizing strategy of the target cell include: (1) when the forecast result is that the target cell has a heavy downlink load, the first cycle optimizing strategy is to adopt a DDDSU frame structure; (2) when the forecast result is that the target cell has a heavy uplink load, the first cycle optimizing strategy is to adopt a DSUUU frame structure.

In an example implementation, since the target cell itself is also a coherent cell of other base station cells, after the target cell obtains the first cycle optimizing strategy, it needs to perform broadcast to other co-frequency adjacent cells. The broadcast information includes the cell identification and the corresponding cycle optimizing strategy.

Step 302: receiving broadcast information from each coherent cell, and the broadcast information includes the second cycle optimizing strategy and the coherent cell identification.

In an example implementation, after each coherent cell obtains the second cycle optimizing strategy, it broadcasts the second cycle optimizing strategy and the coherent cell identification together, and the target cell can receive the broadcast information of each coherent cell.

In an example implementation, because the cycle of the target cell and the cycle of each coherent cell are consistent, the time that the target cell generates the cycle optimizing strategy and the time that each coherent cell generates the cycle optimizing strategy are also consistent. The target cell can receive the broadcast information of each coherent cell within a preset time after generating the first cycle optimizing strategy, and start updating the initialization strategy information table after the end of the preset time.

Step 303: filling a preset initialization strategy information table with the first cycle optimizing strategy and each second cycle optimizing strategy according to the target cell identification and each coherent cell identification, and generating the strategy information table.

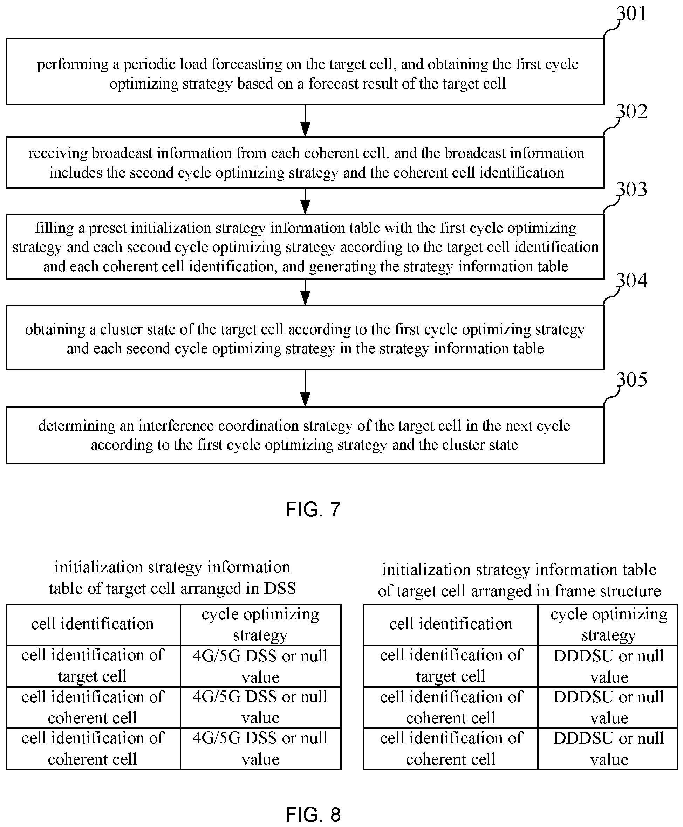

In an example implementation, the format of the initialization strategy information table is consistent with the format of the strategy information table of FIG. 3 or FIG. 5, except that the initialization strategy information table only contains the cell identification of the target cell and the cell identifications of each coherent cell, and the cycle optimizing strategy corresponding to the target cell and the cycle optimizing strategies corresponding to each coherent cell are empty. After obtaining the first cycle optimizing strategy of the target cell and the second cycle optimizing strategy of each coherent cell, filling the corresponding positions of the initialization strategy information table with the first cycle optimizing strategy and each second cycle optimizing strategy according to the target cell identification and each coherent cell identification, so that the strategy information table of the target cell can be generated. As shown in FIG. 8, the initialization strategy information table contains the cell identification of the target cell and the cell identifications of each coherent cell. In the initialization strategy information table, the cycle optimizing strategy corresponding to the target cell and the cycle optimizing strategies corresponding to each coherent cell can be the initial cycle optimizing strategy (4G/5G DSS or DDDSU), or it can be a null value.

Step 304: obtaining a cluster state of the target cell according to the first cycle optimizing strategy and each second cycle optimizing strategy in the strategy information table.

In an example implementation, this step is substantially the same as step 102 or step 202 in the embodiment of the present application, and will not be described again here.

Step 305: determining an interference coordination strategy of the target cell in the next cycle according to the first cycle optimizing strategy and the cluster state.

In an example implementation, this step is substantially the same as step 103 or step 203 in the embodiment of the present application, and will not be described again here.

In the embodiment of the present application, on the basis of other embodiments, the strategy information table of the target cell can be updated at intervals of cycle, so that the determined interference coordination strategy can be consistent with the business conditions of the target cell, thus, the interference coordination capability of the interference coordination strategy can be optimized.

The steps of the various methods above are divided just for the purpose of clear description. During implementation, they can be combined into one step or perform splitting of some steps into multiple steps. As long as the same logical relationship is included, it is within the scope of the present application. Adding insignificant modifications or introducing insignificant designs to the algorithm or process, but not changing the core design of the algorithm and process, are within the scope of the present application.

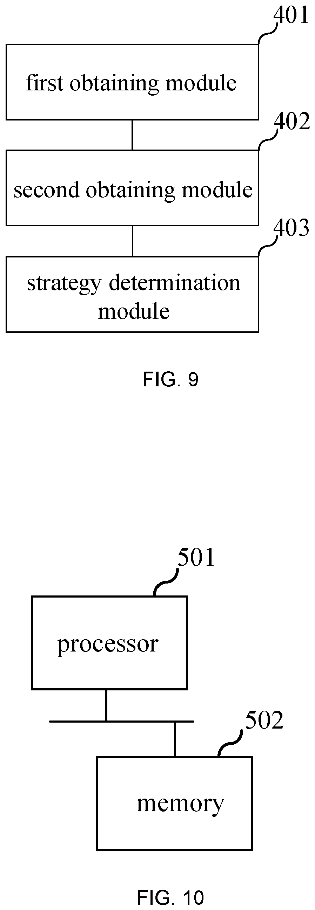

Another embodiment of the present application relates to an interference coordination device of a cell, which is applied in a target cell using a frame structure arrangement scheme or a DSS arrangement scheme. The following is a detailed description of the interference coordination device of the cell in this embodiment. The following content is only an implementation detail provided for the convenience of understanding, and is not necessary to implement this example. FIG. 9 is a schematic view of the interference coordination device of the cell in this embodiment, which includes: a first obtaining module 401, a second obtaining module 402, and a strategy determination module 403.

The first obtaining module 401 is configured to obtain a strategy information table of a target cell in a next cycle, and the strategy information table includes a first cycle optimizing strategy of the target cell and a second cycle optimizing strategy of each coherent cell of the target cell.

The second obtaining module 402 is configured to obtain a cluster state of the target cell according to the first cycle optimizing strategy and each second cycle optimizing strategy; and
The strategy determination module 403 is configured to determine an interference coordination strategy of the target cell in the next cycle according to the first cycle optimizing strategy and the cluster state based on a preset interference coordination rule.

It is not difficult to find that this embodiment is a system embodiment corresponding to the above method embodiment, and this embodiment can be implemented in cooperation with the above method embodiment. The relevant technical details and technical effects mentioned in the above embodiment are still valid in this embodiment, and will not be described again in order to reduce duplication. Correspondingly, the relevant technical details mentioned in this embodiment can also be applied to the above embodiments.

It should be noted that this system embodiment is mainly aimed at a description of the interference coordination method of the cell provided in the method embodiment at the software implementation level, and its implementation further needs to rely on hardware support. For example, the functions of related modules can be deployed to the processor so that the processor can run to implement the corresponding functions. In particular, the relevant data generated by the operation can be stored in the memory for subsequent inspection and use.

It is worth mentioning that each module involved in this embodiment is a logical module. In practical applications, a logical unit can be a physical unit or a part of a physical unit, and further can be implemented as a combination of multiple physical units. In addition, in order to highlight the innovative part of the present application, units that are not closely related to solving the technical problems raised in the present application are not introduced in this embodiment, but this does not mean that other units do not exist in this embodiment.

Another embodiment of the present application relates to a server, as shown in FIG. 10, including: at least one processor 501, and a memory 502 communicatively connected to the at least one processor 501; the memory 502 is configured to store an instruction executable by the at least one processor 501, and the instruction is executed by the at least one processor 501 so that the at least one processor 501 can execute the interference coordination method of the cell in the above embodiments.

The memory and the processor are connected by adopting bus mode. The bus can include any number of interconnected buses and bridges. The bus connects various circuits of one or more processors and memories together. The bus further connects together various other circuits such as peripherals, voltage regulators, and power management circuits, which are all well known in the art and therefore will not be further described herein. The bus interface provides the interface between the bus and the transceiver. A transceiver may be one element or may be multiple elements, such as multiple receivers and transmitters, providing a unit for communicating with various other devices over a transmission medium. The data processed by the processor is transmitted on the wireless medium by the antenna. Furthermore, the antenna further receives the data and transmits the data to the processor.

The processor is responsible for managing the bus and general processing, and further can provide a variety of functions, including timing, peripheral interfaces, voltage regulation, power management, and other control functions. Memory can be configured to store data used by the processor when performing operations.

Another embodiment of the present application relates to a computer-readable storage medium, which stores a computer program. When the computer program is executed by a processor, the above method embodiments are implemented.

That is, those skilled in the art can understand that all steps or part of the steps in implementing the methods of the above embodiments can be completed by instructing relevant hardware by a program. The program is stored in a storage medium and includes several instructions to cause a device (which can be a microcontroller, a chip, etc.) or a processor to execute all steps or part of the steps of the methods described in various embodiments of the present application. The aforementioned storage media include: U disk, mobile hard disk, Read-Only Memory (ROM for short), Random Access Memory (RAM for short), magnetic disk or optical disk and other media that can store program code.

Those of ordinary skill in the art can understand that the above-mentioned embodiments are specific examples for implementing the present application. In practical applications, various changes can be made in form and details without departing from the scope of the present application.

## Claims

1. An interference coordination method of a cell, **characterized by** comprising:
obtaining a strategy information table of a target cell in a next cycle, wherein the strategy information table comprises a first cycle optimizing strategy of the target cell and a second cycle optimizing strategy of each coherent cell of the target cell;
obtaining a cluster state of the target cell according to the first cycle optimizing strategy and each second cycle optimizing strategy; and
determining an interference coordination strategy of the target cell in the next cycle according to the first cycle optimizing strategy and the cluster state.

2. The interference coordination method of the cell according to claim 1, wherein in response to that the target cell adopts a dynamic sharing spectrum arrangement manner, the first cycle optimizing strategy is a pure 5G state or a 4G/5G shared state, and the cluster state is an intra-cluster state or a non-intra-cluster state;
the determining the interference coordination strategy of the target cell in the next cycle according to the first cycle optimizing strategy and the cluster state comprises:
in response to that the cluster state is the intra-cluster state and the first cycle optimizing strategy is the pure 5G state, the interference coordination strategy is not to perform interference coordination; or,
in response to that the cluster state is the intra-cluster state and the first cycle optimizing strategy is the 4G/5G shared state, the interference coordination strategy is an adaptive switch symbol level rate matching strategy; or,
in response to that the cluster state is the non-intra-cluster state and the first cycle optimizing strategy is the pure 5G state, the interference coordination strategy is an adaptive switch symbol level rate matching strategy; or,
in response to that the cluster state is the non-intra-cluster state and the first cycle optimizing strategy is the 4G/5G shared state, the interference coordination strategy is an adaptive switch symbol level rate matching strategy.

3. The interference coordination method of the cell according to claim 2, wherein the adaptive switch symbol level rate matching strategy comprises:
determining whether to perform symbol-level rate matching according to interference strength of a 4G Cell Reference Signal of each coherent cell; and
selecting a target resource block from each of resource blocks and dispatching according to an interference situation of each resource block measured by the target cell on a Channel State Information-Interference Measurement Resource.

4. The interference coordination method of the cell according to claim 1, wherein in response to that the target cell adopts a frame structure arrangement manner, the first cycle optimizing strategy is a DDDSU frame structure or a DSUUU frame structure, and the cluster state is an intra-cluster state or a non-intra-cluster state;
the determining the interference coordination strategy of the target cell in the next cycle according to the first cycle optimizing strategy and the cluster state comprises:
in response to that the cluster state is the intra-cluster state and the first cycle optimizing strategy is the DDDSU frame structure, the interference coordination strategy is not to perform interference coordination; or
in response to that the cluster state is the non-intra-cluster state and the first cycle optimizing strategy is the DDDSU frame structure, the interference coordination strategy is to perform coordination in combination with a coordination switch bitmap of each coherent cell; or
in response to that the cluster state is the intra-cluster state and the first cycle optimizing strategy is the DSUUU frame structure, the interference coordination strategy is not to perform interference coordination; or
in response to that the cluster state is the non-intra-cluster state and the first cycle optimizing strategy is the DSUUU frame structure, the interference coordination strategy is to perform coordination in combination with a coordination switch bitmap of each coherent cell.

5. The interference coordination method of the cell according to any one of claims 1 to 4, wherein the strategy information table further comprises a target cell identification of the target cell and a coherent cell identification of each coherent cell of the target cell;
the obtaining the strategy information table of the target cell in the next cycle comprises:
performing a periodic load forecasting on the target cell, and obtaining the first cycle optimizing strategy based on a forecast result of the target cell;
receiving broadcast information from each coherent cell, and the broadcast information comprises the second cycle optimizing strategy and the coherent cell identification; and
filling a preset initialization strategy information table with the first cycle optimizing strategy and each second cycle optimizing strategy according to the target cell identification and each coherent cell identification, and generating the strategy information table.

6. The interference coordination method of the cell according to claim 5, wherein in response to that the target cell adopts a dynamic sharing spectrum arrangement manner, the obtaining the first cycle optimizing strategy based on the forecast result of the target cell comprises:
in response to that the forecast result is that the target cell has a light 4G load and a basic cell corresponding to the target cell has a light 4G load, the first cycle optimizing strategy is to adopt the pure 5G state; or,
in response to that the forecast result is that the target cell has a light 4G load and a basic cell corresponding to the target cell has a heavy 4G load, the first cycle optimizing strategy adopts the 4G/5G shared state; or,
in response to that the forecast result is that the target cell has a heavy 4G load, the first cycle optimizing strategy adopts the 4G/5G shared state.

7. The interference coordination method of the cell according to claim 5, wherein in response to that the target cell adopts a frame structure arrangement manner;
the obtaining the first cycle optimizing strategy based on the forecast result of the target cell comprises:
in response to that the forecast result is that the target cell has a heavy downlink load, the first cycle optimizing strategy is to adopt a DDDSU frame structure; or,
in response to that the forecast result is that the target cell has a heavy uplink load, the first cycle optimizing strategy is to adopt a DSUUU frame structure.

8. The interference coordination method of the cell according to any one of claims 1 to 4, wherein the obtaining the cluster state of the target cell according to the first cycle optimizing strategy and each second cycle optimizing strategy comprises:
in response to that the first cycle optimizing strategy and each second cycle optimizing strategy are all consistent, the cluster state of the target cell is an intra-cluster state; or
in response to that there is inconsistency between the first cycle optimizing strategy and each second cycle optimizing strategy, the cluster state of the target cell is a non-intra-cluster state.

9. An interference coordination device of a cell, **characterized by** comprising:
a first obtaining module, configured to obtain a strategy information table of a target cell in a next cycle, and the strategy information table comprises a first cycle optimizing strategy of the target cell and a second cycle optimizing strategy of each coherent cell of the target cell;
a second obtaining module, configured to obtain a cluster state of the target cell according to the first cycle optimizing strategy and each second cycle optimizing strategy; and
a strategy determination module, configured to determine an interference coordination strategy of the target cell in the next cycle according to the first cycle optimizing strategy and the cluster state based on a preset interference coordination rule.

10. A server, **characterized by** comprising:
at least one processor; and
a memory communicatively connected to the at least one processor; wherein,
the memory is configured to store an instruction executable by the at least one processor, and the instruction is executed by the at least one processor so that the at least one processor executes the interference coordination method of the cell according to any one of claims 1 to 8.

11. A computer-readable storage medium storing a computer program, wherein when the computer program is executed by a processor, the interference coordination method of the cell according to any one of claims 1 to 8 is implemented.
